# EUROPEAN PATENT APPLICATION

(11) **EP 3 404 510 A1**
(43) Date of publication of application: **21.11.2018**
(21) Application number: 17171215.1
(22) Date of filing: 16.05.2017
(51) Int. Cl.: G06F 3/01, G06T 19/00

(54) **FREE VIEWPOINT MEDIATED REALITY**

(71) Applicant: Nokia Technologies Oy, 02610 Espoo (FI)
(72) Inventor: ERONEN, Antti, 33820 Tampere (FI); LEHTINIEMI, Arto, 33880 Lempäälä (FI); LEPPÄNEN, Jussi, 33580 Tampere (FI); ARRASVUORI, Juha, 33100 Tampere (FI)
(74) Representative: Nokia EPO representatives

(57) **Abstract**

A method comprising:
(i) causing rendering of a virtual scene of the virtual space
that corresponds to a virtual position of a user in the virtual space as determined by a combination of a physical position of a user in the physical space and the first spatial relationship between the virtual space and the physical space, wherein the virtual space comprises multiple virtual elements and the physical space comprises multiple physical elements;
(iii) responsive to determining that one or more first virtual elements of the multiple virtual elements are not positioned in a particular relationship with one or more first physical elements of the multiple physical elements, changing the first spatial relationship between the virtual space and
the physical space to define a second spatial relationship between
the virtual space and the physical space such that
the one or more first virtual elements of the multiple virtual elements are positioned in the particular relationship with
the one or more first physical elements of the multiple physical elements; and
(iv) causing rendering of a virtual scene of the virtual space
that corresponds to a virtual position of a user in the virtual space as determined by the combination of a physical position of a user in the physical space and the second spatial relationship between the virtual space and the physical space
and changing the rendered virtual scene as the user physical position in the physical space changes to a second physical position to render the one or more first virtual elements of the multiple virtual elements that are positioned in the particular relationship with the one or more first physical elements of the multiple physical elements.

## Description

### TECHNOLOGICAL FIELD

Embodiments of the present invention relate to free viewpoint mediated reality. In particular, embodiments of the present invention relate to free viewpoint virtual reality.

### BACKGROUND

"Mediated reality" describes when a user experiences a fully or partially artificial environment (a virtual space) as a virtual scene at least partially rendered by an apparatus to a user. The virtual scene is determined by a virtual position within the virtual space.

First person perspective-mediated reality (or free viewpoint mediated reality) is mediated reality in which the user's physical position (location and orientation) in a physical space determines the virtual position (location and orientation) within the virtual space.

It may be problematic if there is no coincidence between constraints to movement present in the physical space and virtual constraints to movement in the virtual space.

It may, for example, be desirable to generate an arbitrary virtual object at a virtual position in the virtual space that is coincident with a corresponding physical position of a physical object in the physical space. The user, when moving in the physical space, can therefore avoid the physical object by avoiding the virtual object in the virtual space.

### BRIEF SUMMARY

According to various, but not necessarily all, embodiments of the invention there is provided a method comprising:
(i) causing rendering of a virtual scene of a virtual space that corresponds to a virtual position of a user in the virtual space as determined by a combination of a physical position of a user in a physical space and the first spatial relationship between the virtual space and the physical space, wherein the virtual space comprises multiple virtual elements and the physical space comprises multiple physical elements;
(iii) responsive to determining that one or more first virtual elements of the multiple virtual elements are not positioned in a particular relationship with one or more first physical elements of the multiple physical elements, changing the first spatial relationship between the virtual space and
   the physical space to define a second spatial relationship between
   the virtual space and the physical space such that
   the one or more first virtual elements of the multiple virtual elements are positioned in the particular relationship with
   the one or more first physical elements of the multiple physical elements; and
(iv) causing rendering of a virtual scene of the virtual space
that corresponds to a virtual position of a user in the virtual space as determined by the combination of a physical position of a user in the physical space and the second spatial relationship between the virtual space and the physical space
and changing the rendered virtual scene as the user physical position in the physical space changes to a second physical position to render the one or more first virtual elements of the multiple virtual elements that are positioned in the particular relationship with the one or more first physical elements of the multiple physical elements.

According to various, but not necessarily all, embodiments of the invention there is provided an apparatus comprising:
at least one processor; and
at least one memory including computer program code;
the at least one memory and the computer program code configured to, with the at least one processor, cause the apparatus at least to perform:
   (i) causing rendering of a virtual scene of a virtual space
      that corresponds to a virtual position of a user in the virtual space as determined by a combination of a physical position of a user in a physical space and the first spatial relationship between the virtual space and the physical space, wherein the virtual space comprises multiple virtual elements and the physical space comprises multiple physical elements;
   (iii) responsive to determining that one or more first virtual elements of the multiple virtual elements are not positioned in a particular relationship with one or more first physical elements of the multiple physical elements, changing the first spatial relationship between the virtual space and
      the physical space to define a second spatial relationship between
      the virtual space and the physical space such that
      the one or more first virtual elements of the multiple virtual elements are positioned in the particular relationship with
      the one or more first physical elements of the multiple physical elements; and
   (iv) causing rendering of a virtual scene of the virtual space
that corresponds to a virtual position of a user in the virtual space as determined by the combination of a physical position of a user in the physical space and the second spatial relationship between the virtual space and the physical space
and changing the rendered virtual scene as the user physical position in the physical space changes to a second physical position to render the one or more first virtual elements of the multiple virtual elements that are positioned in the particular relationship with the one or more first physical elements of the multiple physical elements.

According to various, but not necessarily all, embodiments of the invention there is provided an apparatus comprising:
means for causing rendering of a virtual scene of a virtual space
that corresponds to a virtual position of a user in the virtual space as determined by a combination of a physical position of a user in a physical space and the first spatial relationship between the virtual space and the physical space, wherein the virtual space comprises multiple virtual elements and the physical space comprises multiple physical elements;
means for, responsive to determining that one or more first virtual elements of the multiple virtual elements are not positioned in a particular relationship with one or more first physical elements of the multiple physical elements, changing the first spatial relationship between the virtual space and
the physical space to define a second spatial relationship between
the virtual space and the physical space such that
the one or more first virtual elements of the multiple virtual elements are positioned in the particular relationship with
the one or more first physical elements of the multiple physical elements; and
means for causing rendering of a virtual scene of the virtual space
that corresponds to a virtual position of a user in the virtual space as determined by the combination of a physical position of a user in the physical space and the second spatial relationship between the virtual space and the physical space; and
means for changing the rendered virtual scene as the user physical position in the physical space changes to a second physical position to render the one or more first virtual elements of the multiple virtual elements that are positioned in the particular relationship with the one or more first physical elements of the multiple physical elements.

According to various, but not necessarily all, embodiments of the invention there is provided a computer program that, when run on a computer, performs:
(i) causing rendering of a virtual scene of the virtual space
   that corresponds to a virtual position of a user in a virtual space as determined by a combination of a physical position of a user in a physical space and the first spatial relationship between the virtual space and the physical space, wherein the virtual space comprises multiple virtual elements and the physical space comprises multiple physical elements;
(iii) responsive to determining that one or more first virtual elements of the multiple virtual elements are not positioned in a particular relationship with one or more first physical elements of the multiple physical elements, changing the first spatial relationship between the virtual space and
   the physical space to define a second spatial relationship between
   the virtual space and the physical space such that
   the one or more first virtual elements of the multiple virtual elements are positioned in the particular relationship with
   the one or more first physical elements of the multiple physical elements; and
(iv) causing rendering of a virtual scene of the virtual space
that corresponds to a virtual position of a user in the virtual space as determined by the combination of a physical position of a user in the physical space and the second spatial relationship between the virtual space and the physical space
and changing the rendered virtual scene as the user physical position in the physical space changes to a second physical position to render the one or more first virtual elements of the multiple virtual elements that are positioned in the particular relationship with the one or more first physical elements of the multiple physical elements.

According to various, but not necessarily all, embodiments of the invention there is provided a method comprising:
(i) causing rendering of a virtual scene of the virtual space
   that corresponds to a virtual position of a user in the virtual space as determined by a combination of a physical position of a user in the physical space and the first spatial relationship between the virtual space and the physical space, wherein the virtual space comprises multiple virtual elements and the physical space comprises multiple physical elements
(ii) determining that one or more first virtual elements of the multiple virtual elements cannot be positioned in a particular relationship with one or more first physical elements of the multiple physical elements and changing the first spatial relationship between the virtual space and
   the physical space to define a second spatial relationship between
   the virtual space and the physical space such that
   the one or more first virtual elements of the multiple virtual elements are positioned in the particular relationship with
   the one or more first physical elements of the multiple physical elements; and
(iii) causing rendering of a virtual scene of the virtual space
that corresponds to a virtual position of a user in the virtual space as determined by the combination of a physical position of a user in the physical space and the second spatial relationship between the virtual space and the physical space.

According to various, but not necessarily all, embodiments of the invention there is provided a method comprising:
(a) causing rendering of a virtual scene of a virtual space
   that corresponds to a virtual position of a user in the virtual space as determined by a combination of a physical position of a user in the physical space and a first spatial relationship between the virtual space and the physical space;
(b) determining that a particular virtual position in the virtual space cannot be accessed because the physical position of a user in the physical space mapped to the particular virtual space via the first spatial relationship cannot be physically accessed by the user and changing between the first spatial relationship and a second spatial relationship wherein the particular virtual position in the virtual space can then be accessed because the physical position of a user in the physical space mapped to the particular virtual space via the second spatial relationship can be physically accessed by the user.
(c) causing rendering of a virtual scene of the virtual space that corresponds to a virtual position of a user in the virtual space as determined by the combination of a physical position of a user in the physical space and a second spatial relationship between the virtual space and the physical space.

According to various, but not necessarily all, embodiments of the invention there is provided a method comprising:
(a) causing rendering of a virtual scene of a virtual space
   that corresponds to a virtual position of a user in the virtual space as determined by a combination of a physical position of a user in the physical space and a first spatial relationship between the virtual space and the physical space;
(b) determining that a particular virtual position in the virtual space can be accessed because the physical position of a user in the physical space mapped to the particular virtual space via the first spatial relationship can be physically accessed by the user;
   changing between the first spatial relationship and a second spatial relationship wherein the particular virtual position in the virtual space cannot then be accessed because the physical position of a user in the physical space mapped to the particular virtual space via the second spatial relationship cannot be physically accessed by the user;
(c) causing rendering of a virtual scene of the virtual space
that corresponds to a virtual position of a user in the virtual space as determined by the combination of a physical position of a user in the physical space and a second spatial relationship between the virtual space and the physical space.

According to various, but not necessarily all, embodiments of the invention there is provided a method comprising:
(i) defining a first spatial relationship between a virtual space comprising multiple virtual elements and a physical space comprising multiple physical elements such that one or more first virtual elements of the multiple virtual elements cannot be positioned in a particular relationship with one or more first physical elements of the multiple physical elements;
(ii) causing rendering of a changeable virtual scene of the virtual space that corresponds to a changing virtual position of a user in the virtual space as determined by a combination of a changing physical position of a user in the physical space and the first spatial relationship between the virtual space and the physical space;
(iii) changing the first spatial relationship between the virtual space and
   the physical space to define a second spatial relationship between
   the virtual space and the physical space such that
   the one or more first virtual elements of the multiple virtual elements are now positioned in the particular relationship with
   the one or more first physical elements of the multiple physical elements; and
(iv) causing rendering of a virtual scene of the virtual space
that corresponds to a virtual position of a user in the virtual space as determined by the combination of a physical position of a user in the physical space and the second spatial relationship between the virtual space and the physical space
and changing the rendered virtual scene as the user physical position in the physical space changes to a second physical position to render the one or more first virtual elements of the multiple virtual elements that are positioned in the particular relationship with the one or more first physical elements of the multiple physical elements.

According to various, but not necessarily all, embodiments of the invention there is provided a method comprising:
(a) causing rendering of a changeable virtual scene of a virtual space that corresponds to a changing virtual position of a user in the virtual space as determined by a combination of a changing physical position of a user in the physical space and a first spatial relationship between the virtual space and the physical space wherein a particular virtual position in the virtual space cannot/can be accessed because the physical position of a user in the physical space mapped to the particular virtual space via the first spatial relationship cannot/can be physically accessed by the user;
(b) changing between the first spatial relationship and a second spatial relationship;
(c) causing rendering of a changeable virtual scene of the virtual space
that corresponds to a changing virtual position of a user in the virtual space as determined by the combination of a physical position of a user in the physical space and a second spatial relationship between the virtual space and the physical space
wherein the particular virtual position in the virtual space can/cannot be accessed because the physical position of a user in the physical space mapped to the particular virtual space via the second spatial relationship can/cannot be physically accessed by the user.

The symbol "/" is used to differentiate in a consistent manner between alternatives- a first embodiment to the immediate left of "/" and a second different embodiment to the immediate right of "/".

According to various, but not necessarily all, embodiments of the invention there is provided examples as claimed in the appended claims.

### BRIEF DESCRIPTION

For a better understanding of various examples that are useful for understanding the detailed description, reference will now be made by way of example only to the accompanying drawings in which:
Fig 1A illustrates a schematic example of a physical space;
Fig 1B illustrates a schematic example of a virtual space;
Fig 1C illustrates an example of a virtual scene from the perspective of the virtual position of Fig 1B;
Figs 2A, 2B, 2C illustrate respectively examples of the physical space, the virtual space and the virtual scene when there is in use a first spatial relationship between the virtual space and the physical space;
Figs 3A, 3B, 3C illustrate respectively examples of the physical space, the virtual space and the virtual scene when there is in use a second spatial relationship between the virtual space and the physical space;
Fig 4 illustrates an example of a method;
Figs 5A to 8A illustrate an example of a physical space at different times t₁-t₄ and Figs 5B to 8B illustrate an example of an associated virtual scene at the different times t₁-t₄;
Fig 9 illustrates an example of a physical space comprising rooms interconnected by a doorway;
Fig 10 illustrates an example of a controller;
Fig 11 illustrates an example of a delivery mechanism for a computer program.

### DEFINITIONS

"Artificial environment" may be something that has been recorded or generated.
"Virtual visual space" refers to fully or partially artificial environment that may be viewed, which may be three dimensional.
"Virtual visual scene" refers to a representation of the visual space viewed from a particular virtual position within the visual space.
'Virtual visual object' is a visible object within a virtual visual scene.

"Virtual sound space" refers to an arrangement of sound sources in a three-dimensional space. A virtual sound space may be defined in relation to recording sounds (a recorded virtual sound space) and in relation to rendering sounds (a rendered virtual sound space).

"Virtual sound scene" refers to a representation of the virtual sound space listened to from a particular virtual position within the sound space.
"Sound object" refers to sound source that may be located within the virtual sound space. A source sound object represents a sound source within the sound space. A recorded sound object represents sounds recorded at a particular microphone or position. A rendered sound object represents sounds rendered from a particular position.

"Virtual space" may mean a virtual visual space, a virtual sound space or a combination of a virtual visual space and corresponding virtual sound space. In some examples, the virtual space may extend horizontally up to 360° and may extend vertically up to 180°
"Virtual scene" may mean a virtual visual scene, mean a virtual sound scene or mean a combination of a virtual visual scene and corresponding virtual sound scene.
'Virtual element' is a part of a virtual scene, it may be an artificial virtual object (e.g. a computer-generated virtual object) or it may be an image of a real object in a physical space that is live or recorded. It may be a sound object and/or a virtual visual object.
"Virtual position" is a position within a virtual space. It may be defined using a location and/or an orientation. It may be considered to be a movable 'point of view'.

"Correspondence" or "corresponding" when used in relation to a virtual sound space and a virtual visual space means that the virtual sound space and virtual visual space are time and space aligned, that is they are the same space at the same time.
"Correspondence" or "corresponding" when used in relation to a virtual sound scene and a virtual visual scene means that the virtual sound space and virtual visual scene are corresponding and a notional listener whose position defines the virtual sound scene and a notional viewer whose position defines the virtual visual scene are at the same location and orientation, that is they have the same virtual position.

"Physical space" refers to a real environment, which may be three dimensional.
'Physical element' is a part of the physical space.
"real scene" refers to a representation of the physical space from a physical position within the physical space.

"Mediated reality" in this document refers to a user experiencing a fully or partially artificial environment (a virtual space) as a virtual scene at least partially rendered by an apparatus to a user. The virtual scene is determined by a virtual position within the virtual space.

"Augmented reality" in this document refers to a form of mediated reality in which a user experiences a partially artificial environment (a virtual space) as a virtual scene comprising a real scene of a physical real world environment (physical space) supplemented by one or more visual and/or audio elements rendered by an apparatus to a user.
"Virtual reality" in this document refers to a form of mediated reality in which a user experiences a fully artificial environment (a virtual space) as a virtual scene rendered by an apparatus to a user.

"Perspective-mediated" as applied to mediated reality, augmented reality or virtual reality means that user actions determine the virtual position within the virtual space, changing the virtual scene.
"First person perspective-mediated" (or free viewpoint) as applied to mediated reality, augmented reality or virtual reality means perspective mediated with the additional constraint that the user's physical position determines the virtual position within the virtual space.
"Third person perspective-mediated" as applied to mediated reality, augmented reality or virtual reality means perspective mediated with the additional constraint that the user's physical position does not determine the virtual position within the virtual space.
"User interactive" as applied to mediated reality, augmented reality or virtual reality means that user actions at least partially determine what happens within the virtual space.

"Displaying" means providing in a form that is perceived visually (viewed) by the user. "Rendering" means providing in a form that is perceived by the user.

### DETAILED DESCRIPTION

In at least some of the examples described below, the user's physical position (location and orientation) in a physical space determines a virtual position of the user (location and orientation) within the virtual space for mediated reality. A spatial relationship between the physical space and the virtual space is automatically changed to control the spatial relationship between virtual elements of the virtual space and physical elements of the physical space. This may, for example, allow a user to move to explore previously inaccessible parts of the virtual space and/or for example, prevent a user from moving to explore previously accessible parts of the virtual space.

Steps may be taken to obscure the change in the spatial relationship from the user.

The figures illustrate examples of mediated reality. The mediated reality may be augmented reality or virtual reality. The mediated reality may be user perspective-mediated and a physical position of the user in a physical space may determine a virtual position of the user in a virtual space.

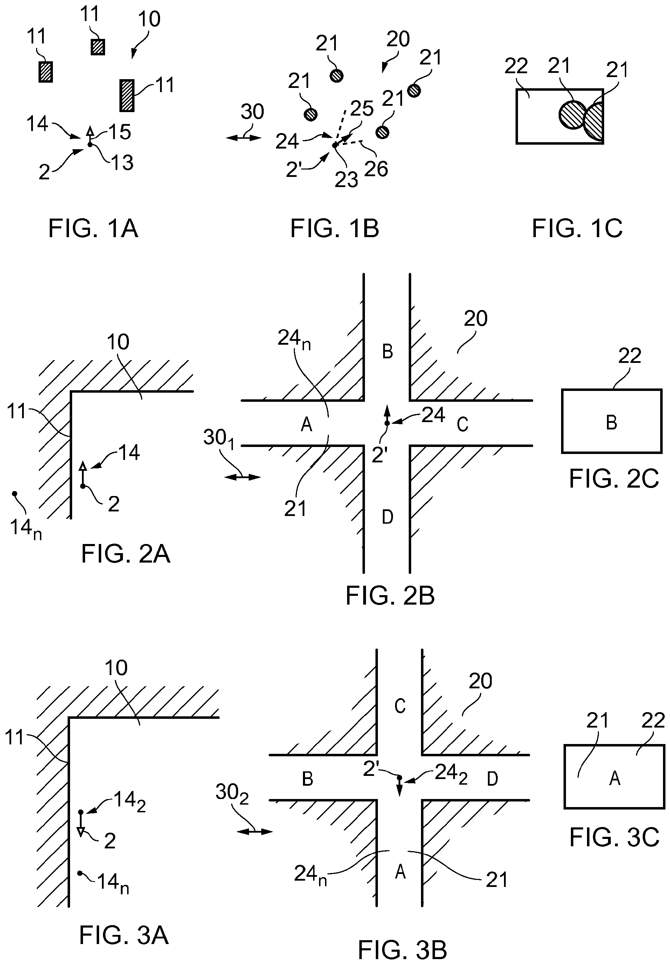

Fig 1A illustrates a schematic example of a physical space 10 comprising physical elements 11 and a user 2. The user 2 has a physical position 14. The physical position 14 is defined by a real location 13 and a real orientation 15. The real orientation 15 may depend on a physical orientation of the user's body, for example a direction in which the user's head points and/or may depend on a direction of the user's gaze. The real location 13 and real orientation 15 can change independently as the user 2 moves in the physical space 10.
Fig 1 B illustrates a schematic example of a virtual space 20 comprising virtual elements 21 and a virtual user 2'.
Some, all or none of the virtual elements 21 may have corresponding physical elements 11. Some, all or none of the physical elements 11 may have corresponding virtual elements 21.

The virtual user 2' has a virtual position 24. The virtual position 24 is defined by a virtual location 23 and a virtual orientation 25.

The mediated reality is user perspective-mediated and a physical position 14 of the user 2 in the physical space 10 determines the virtual position 24 of the user in the virtual space 20. The virtual position 24 depends on the physical position 14. The virtual orientation 25 may depend on the real orientation 15 and the virtual location 23 may depend on the real location 13. The virtual location 23 and the virtual orientation 25 can therefore change independently as the user 2 moves in the physical space 10.

If the virtual space 20 is three-dimensional, the virtual location 23 has three degrees of freedom e.g. up/down, forward/back, left/right and the virtual orientation 25 has three degrees of freedom e.g. roll, pitch, yaw. The virtual position 24 may be continuously variable in virtual location 23 and/or virtual orientation 25 and user movement then changes the virtual location 23 and/or virtual orientation 25 continuously. Alternatively, the virtual position 24 may have discrete quantised virtual locations 23 and/or discrete quantised virtual orientations 25 and user movement switches by discretely jumping between the allowed virtual locations 23 and/or orientations 25.

Fig 1C illustrates an example of a virtual scene 22 from the perspective of the virtual position 24 of Fig 1 B. The virtual scene 22 corresponds to a changing virtual position 24 of a virtual user 2' in the virtual space 20.

The virtual scene 22 illustrated may be mediated reality scenes, for example virtual reality scenes or augmented reality scenes. A virtual reality scene is fully artificial. An augmented reality scene is partially artificial, partially real.

The virtual scene 22 is first person perspective-mediated and may also be user interactive.

In this particular example, the virtual scene 22 is a displayed virtual visual scene that represents the virtual visual space 20 viewed from a particular virtual position 24 within the virtual visual space 20. The virtual visual scene 22 is determined by the virtual position 24 within the virtual space 20 and a field of perception 26 (field of view) as illustrated in Fig 1 B.

There is a defined spatial relationship 30 between the physical space 10 and the virtual space 20. Each real location 13 in the physical space 10, through the spatial relationship 30, has a corresponding virtual location 23 in the virtual space 20 and vice versa. Each real orientation 15 in the physical space 10, through the spatial relationship 30, has a corresponding virtual orientation 25 in the virtual space 20 and vice versa.

The spatial relationship 30 may be defined as a mapping that provides a translation and an orientation between the physical space 10 and the virtual space 20. A change in the spatial relationship 30 may be defined as a change in the mapping that provides the translation and the orientation- a change in translation and/or orientation.

Thus a linear mapping exists between the physical space 10 and the virtual space 20 and the same mapping exists between each physical position 14 in the physical space 10 and its corresponding virtual position 24 in the virtual space 20.

In some examples, the spatial relationship 30 may be such that a virtual position 24 in the virtual space 20 cannot be accessed because the physical position 14 that maps to that virtual position 24 via the current spatial relationship 30 cannot be accessed.
Thus physical elements 11 can prevent access to virtual elements 21 in the virtual space. For example a physical object (e.g. a wall, furniture, other person etc) may prevent access to a virtual element (e.g. a virtual object, a virtual doorway, a virtual path etc).

In some circumstances, it is desirable to change the spatial relationship 30 so that a physical object (e.g. a wall, furniture, other person etc) does not or no longer prevents access to a virtual element (e.g. an virtual object, a virtual doorway, a virtual path etc). Access requires that a spatial relationship between the virtual space 20 and the physical space 10 exists such that one or more first virtual elements 21 are positioned in a particular relationship with one or more first physical elements 11. It is therefore desirable to change the spatial relationship 30 between the virtual space 20 and the physical space 10 such that one or more first virtual elements 21 are positioned in a particular relationship with one or more first physical elements 11. This may allow access to virtual positions 24, previously inaccessible, associated with the one or more first virtual elements 21.

In other circumstances, it is desirable to change the spatial relationship 30 so that a physical object (e.g. a wall, furniture, other person etc) does prevent access to a virtual element (e.g. an object, a doorway, a path etc). Preventing access requires a spatial relationship between the virtual space 20 and the physical space 10 such that one or more first virtual elements 21 are positioned in a particular relationship with one or more first physical elements 11. It is therefore desirable to change the spatial relationship 30 between the virtual space 20 and the physical space 10 such that one or more first virtual elements 21 are positioned in a particular relationship with one or more first physical elements 11. This may prevent access to virtual positions 24, previously accessible, associated with the one or more first virtual elements 21.

The term inaccessible may be used to describe inaccessibility by immediate action and/or inaccessibility within a limited number of actions and/or inaccessibility by any action.

The term accessible may be used to describe accessibility by immediate action and/or accessibility within a limited number of actions and/or accessibility by any action.

For example, the one or more first virtual elements of the multiple virtual elements may be immediately accessible/inaccessible because they are adjacent a virtual position of the user in the virtual space and the one or more first physical elements of the multiple physical elements are adjacent a physical position of the user in the physical space.

For example, the one or more first virtual elements of the multiple virtual elements may be accessible/inaccessible within a limited number of actions, when a likelihood that the one or more first virtual elements of the multiple virtual elements are likely to be accessed exceeds a threshold such as, for example, a distance threshold.

Figs 2A, 2B, 2C illustrate respectively the physical space 10, the virtual space 20 and the virtual scene 22 of Figs 1A, 1B, 1C when there is a first spatial relationship 30₁
between the virtual space 20 and the physical space 10. The first spatial relationship 30₁ is such that one or more first virtual elements 21 are not positioned and cannot be positioned in the particular relationship with the one or more first physical elements 11.

The virtual scene 22 of the virtual space 20 corresponds to a changing virtual position 24 of a user 2' in the virtual space as determined by a combination of a changing physical position 14 of the user 2 in the physical space 10 and the first spatial relationship 30₁ between the virtual space 20 and the physical space 10.

In the illustrated example, the one or more first virtual elements 21 are not positioned in the particular relationship with the one or more first physical elements 11 and the virtual position 24ₙ of a user 2' for accessing the one or more first virtual elements 21 is inaccessible. The virtual position 24ₙ of a user 2' for accessing the one or more first virtual elements 21 is inaccessible, according to the first spatial relationship 30₁ because the required physical position 14ₙ of the user 2, according to the first spatial relationship 30₁, is inaccessible to the user 2 (in this example, it is inside wall 11). As the one or more first virtual elements 21 are not positioned in the particular relationship with the one or more first physical elements 11 certain virtual positions (e.g. position 24ₙ), associated with the one or more first virtual elements 21 are inaccessible. Even when certain virtual positions (e.g. position 24ₙ), associated with the one or more first virtual elements 21 are inaccessible it may, however, still be possible to view the one or more first virtual elements 21 in a virtual scene 22 defined by a different accessible virtual position 24.

Figs 3A, 3B, 3C illustrate respectively the physical space 10, the virtual space 20 and the virtual scene 22 of Figs 1A, 1B, 1C and Figs 2A, 2B, 2C when there has been a change in the spatial relationship 30 and the first spatial relationship 30₁ has been replaced by a second spatial relationship 30₂ between the virtual space 20 and the physical space 10. The second spatial relationship 30₂ is such that one or more first virtual elements 21 are now positioned in the particular relationship with the one or more first physical elements 11.

The virtual scene 22 of the virtual space 20 corresponds to a changing virtual position 24 of a user 2' in the virtual space 20 as determined by a combination of a changing physical position 14 of the user 2 in the physical space 10 and the second spatial relationship 30₂ between the virtual space 20 and the physical space 10.

In the illustrated example, the one or more first virtual elements 21 are positioned in the particular relationship with the one or more first physical elements 11 and the virtual position 24ₙ of a user 2' for accessing the one or more first virtual elements 21 is now accessible. The virtual position 24ₙ of a user 2' for accessing the one or more first virtual elements 21 is accessible, according to the second spatial relationship 30₂ because the required physical position 14ₙ of the user 2, according to the second spatial relationship 30₂, is accessible to the user 2 (in this example, it is no longer behind the wall 11). As the one or more first virtual elements 21 are positioned in the particular relationship with the one or more first physical elements 11 certain virtual positions (e.g. position 24ₙ), associated with the one or more first virtual elements 21 are accessible.

As the user physical position 14 in the physical space 10 changes to a second physical position 14₂, the user virtual position 24 in the virtual space 20 changes to a second virtual position 24₂. This changes the rendered virtual scene 22 to include the one or more first virtual elements 21 of the multiple virtual elements that are now positioned in the particular relationship with the one or more first physical elements 11 of the multiple physical elements. Then if the user physical position 14 in the physical space 10 changes to physical position 14ₙ, the user virtual position 24 in the virtual space 20 changes to a virtual position 24ₙ

The change in the spatial relationship 30 from the first spatial relationship 30₁ to the second spatial relationship 30₂ may be defined as a change in translation and/or a change in orientation (a rotation).

The change in the spatial relationship 30 from the first spatial relationship 30₁ to the second spatial relationship 30₂ may additionally be defined by a change scale in that a change in position in the physical space results in different scale of change in position in the virtual space 20.

Figs 2A-2C illustrate rendering of a virtual scene 22 of a virtual space 20 that corresponds to a virtual position 24 of a user 2' in the virtual space 20 as determined by a combination of a physical position 14 of a user 2 in the physical space 10 and a first spatial relationship 30₁ between the virtual space 20 and the physical space 10 wherein a particular virtual position 24ₙ in the virtual space 20 cannot be accessed because the physical position 14ₙ of a user 2 in the physical space 10 mapped to the particular virtual position 24ₙ via the first spatial relationship 30₁ cannot be physically accessed by the user 2.

Figs 3A-3C illustrates rendering of a virtual scene 22 of the virtual space 20 that corresponds to a virtual position 24 of a user 2' in the virtual space 20 as determined by the combination of a physical position 14 of a user 2 in the physical space 10 and a second spatial relationship 30₂ between the virtual space 20 and the physical space 10 wherein the particular virtual position 24ₙ in the virtual space 20 can be accessed because the physical position 14ₙ of a user 2 in the physical space 10 mapped to the particular virtual position 24ₙ via the second spatial relationship 30₂ can be physically accessed by the user 2.

The second spatial relationship 30₂ may be created by identifying an available physical direction in which user movement can occur and identifying a target virtual direction in which virtual user movement is going to or is likely to occur and then creating and using a spatial relationship 30 that maps the identified available physical direction to the identified target virtual direction. This may occur when the user is oriented in a direction other than the available physical direction.

In some but not necessarily all examples, the second spatial relationship 30₂ is determined when an incorrect spatial relationship between the virtual space 20 and the physical space 10 is determined because a portion of the virtual space (A, Fig 2B) that should be accessible is not accessible according to a current spatial relationship because of constraints on user movement within the physical space.

Figs 2A-2C illustrate rendering of a c virtual scene 22 of a virtual space 20 that corresponds to a virtual position 24 of a user 2' in the virtual space 20 as determined by a combination of a physical position 14 of a user 2 in the physical space 10 and a first spatial relationship 30₁ between the virtual space 20 and the physical space 10 wherein a particular virtual position (B) in the virtual space 20 can be accessed because the physical position 14ₙ of a user 2 in the physical space 10 mapped to the particular virtual position (B)_ via the first spatial relationship 30₁ can be physically accessed by the user 2.

Figs 3A-3C illustrates rendering of a virtual scene 22 of the virtual space 20 that corresponds to a virtual position 24 of a user 2' in the virtual space 20 as determined by the combination of a physical position 14 of a user 2 in the physical space 10 and a second spatial relationship 30₂ between the virtual space 20 and the physical space 10 wherein the particular virtual position (B) in the virtual space 20 cannot be accessed because the physical position 14ₙ of a user 2 in the physical space 10 mapped to the particular virtual position (B) via the second spatial relationship 30₂ cannot be physically accessed by the user 2.

The second spatial relationship 30₂ may be created by identifying an available physical direction in which user movement cannot occur and identifying a target virtual direction in which virtual user movement is going to or is likely to occur and then creating and using a spatial relationship 30 that maps the identified available physical direction to the identified target virtual direction. This may occur when the user is oriented in a direction other than the available physical direction.

In some but not necessarily all examples, the second spatial relationship 30₂ is determined when an incorrect spatial relationship between the virtual space and the physical space is determined because a portion of the virtual space (B, Fig 2B) that should be inaccessible in the virtual space 20 because of constraints on user movement within the physical space 10. is not inaccessible because constraints on user movement within the physical space 10 are incorrectly placed according to a current spatial relationship.

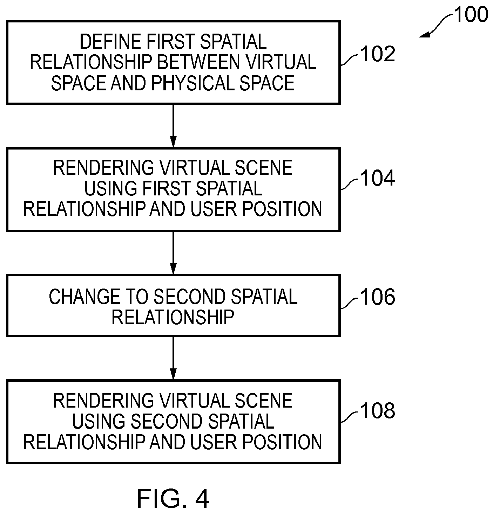

Fig 4 illustrates an example of a method 100. The method 100 at block 102 comprises:
(i) defining a first spatial relationship 30₁ between a virtual space 20 comprising multiple virtual elements 21 and a physical space 10 comprising multiple physical elements 11 such that one or more first virtual elements 21 of the multiple virtual elements 21 cannot be positioned in a particular relationship with one or more first physical elements 11 of the multiple physical elements 11.

The method 100 at block 104 comprises:
(ii) causing rendering of a virtual scene 22 of the virtual space 20 that corresponds to a virtual position 24 of a user 2 in the virtual space 20 as determined by a combination of a physical position 14 of a user 2 in the physical space 10 and the first spatial relationship 30₁ between the virtual space 20 and the physical space 10. , The virtual space comprises multiple virtual elements and the physical space comprises multiple physical elements.

The method 100 at block 106 comprises:
(iii) responsive to determining that one or more first virtual elements of the multiple virtual elements are not positioned in a particular relationship with one or more first physical elements of the multiple physical elements, changing the first spatial relationship 30₁ between the virtual space 20 and the physical space 10 to define a second spatial relationship 30₂ between the virtual space 20 and the physical space 10 such that the one or more first virtual elements 21 of the multiple virtual elements 21 are now positioned in the particular relationship with
   the one or more first physical elements 11 of the multiple physical elements 11.

The method 100 at block 108 comprises:
(iv) causing rendering of a virtual scene 22 of the virtual space 20 that corresponds to a virtual position 24 of a user 2 in the virtual space 20 as determined by the combination of a physical position 14 of a user 2 in the physical space 10 and the second spatial relationship 30₂ between the virtual space 20 and the physical space 10 and changing the rendered virtual scene 22 as the user 2 physical position 14 in the physical space 10 changes to a second physical position 14 to render the one or more first virtual elements 21 of the multiple virtual elements 21 that are positioned in the particular relationship with the one or more first physical elements 11 of the multiple physical elements 11.

Any one, any combination or all of the block (i) to (iv) may occur automatically without any user input other than a change in physical position 14 to change the virtual position 24.

In some but not necessarily all examples, block 105 may determine that one or more first virtual elements of the multiple virtual elements are not positioned in the particular relationship with one or more first physical elements of the multiple physical elements by: determining that a likelihood that the one or more first virtual elements of the multiple virtual elements are likely to be accessed exceeds a threshold; and
determining that access to the one or more first virtual elements of the multiple virtual elements will be obstructed by the one or more first physical elements, wherein for the one or more first virtual elements to be positioned in the particular relationship with the one or more first physical elements, the one or more first physical elements will not obstruct access to the one or more first virtual elements

In some but not necessarily all examples, block 105 may determine that one or more first virtual elements of the multiple virtual elements are not positioned in the particular relationship with one or more first physical elements of the multiple physical elements by: determining that one or more first virtual elements of the multiple virtual elements are not positioned in the particular relationship with one or more first physical elements of the multiple physical elements comprises:
determine that a likelihood that the one or more first virtual elements of the multiple virtual elements are likely to be accessed exceeds a threshold
determining that access to the one or more first virtual elements of the multiple virtual elements that should be inaccessible will not be obstructed by the one or more first physical elements wherein for the one or more first virtual elements to be positioned in the particular relationship with the one or more first physical elements, the one or more first physical elements will obstruct access to the one or more first virtual elements.

In some but not necessarily all examples, block 105 may determine that one or more first virtual elements of the multiple virtual elements are not positioned in the particular relationship with one or more first physical elements of the multiple physical elements by determining that one or more first virtual elements of the multiple virtual elements are not positioned in the particular relationship with one or more first physical elements of the multiple physical elements comprises:
determining that the one or more first virtual elements of the multiple virtual elements are adjacent a virtual position of the user in the virtual space and the one or more first physical elements of the multiple physical elements are adjacent a physical position of the user in the physical space
determining that a particular virtual position in the virtual space that should be accessible cannot be accessed because the physical position of a user in the physical space mapped to the particular virtual space via the first spatial relationship cannot be physically accessed by the user

In some but not necessarily all examples, block 105 may determine that one or more first virtual elements of the multiple virtual elements are not positioned in the particular relationship with one or more first physical elements of the multiple physical elements by determining that one or more first virtual elements of the multiple virtual elements are not positioned in the particular relationship with one or more first physical elements of the multiple physical elements comprises:
determining that the one or more first virtual elements of the multiple virtual elements are adjacent a virtual position of the user in the virtual space and the one or more first physical elements of the multiple physical elements are adjacent a physical position of the user in the physical space;
determining that a particular virtual position in the virtual space that should not be accessible can be accessed because the physical position of a user in the physical space mapped to the particular virtual space via the first spatial relationship can be physically accessed by the user.

Determining that one or more first virtual elements of the multiple virtual elements are not positioned in the particular relationship with one or more first physical elements of the multiple physical elements comprises: determining that one or more first physical elements of the multiple physical elements are adjacent a physical position of the user in the physical space by sensing the user's physical space 10.

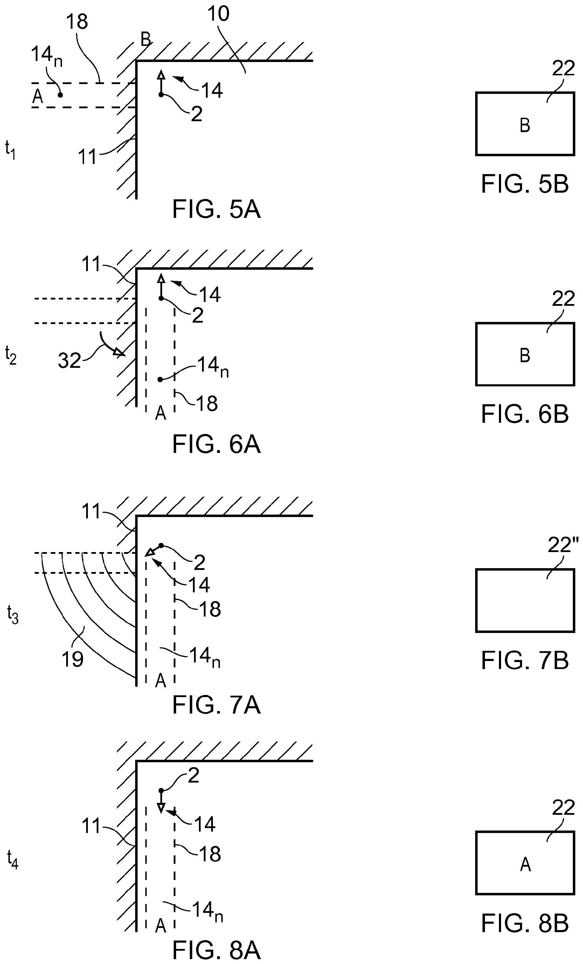

Figs 5A to 8A illustrate an example of a physical space at different times t₁-t₄. Figs 5B to 8B illustrate an example of an associated virtual scene 22 at the different times t₁-t₄.

Fig 5A illustrates a physical space 10 that corresponds to the physical space 10 in Fig 2A at time t₁ and Fig 5B illustrates a virtual scene 22 that corresponds to the virtual scene 22 in Fig 2C.

Fig 8A illustrates a physical space 10 that corresponds to the physical space 10 in Fig 3A at time t₄ and Fig 8B illustrates a virtual scene 22 that corresponds to the virtual scene 22 in Fig 3C.

Figs 6A and 7A illustrates the physical space 10 between time t₁ and t₄ and Figs 6B and 7B illustrates the virtual scene 22 between time t₁ and t₄

Referring to Fig 5A, the virtual position 24ₙ of a user 2' for accessing the one or more first virtual elements 21 is inaccessible, according to the first spatial relationship 30₁ because the required physical position 14ₙ of the user 2, according to the first spatial relationship 30₁, is inaccessible to the user 2 (in this example, it is inside wall 11). The required physical position 14ₙ of the user 2, according to the first spatial relationship 30₁, is the physical position that is mapped by the first spatial relationship 30₁ between the virtual space and the physical space to the virtual position 24ₙ of a user 2' required to access the one or more first virtual elements 21. The figure illustrates the putative path 18 in physical space 10 to the required physical position 14ₙ. In this example, the putative path 18 is physically inaccessible.

Fig 6A and 6B illustrate the change 32 in the first spatial relationship 30₁ that is needed to make the required physical position 14ₙ and the putative path 18 to the required physical position 14ₙ physically accessible to the user 2. The changed spatial; relationship is the second spatial relationship 30₂. The required physical position 14ₙ of the user 2, according to the new second spatial relationship 30₂, is the physical position that is mapped by the second spatial relationship 30₂ between the virtual space and the physical space to the virtual position 24ₙ of a user 2' required to access the one or more first virtual elements 21. The figure illustrates that the putative path 18 in physical space 10 to the required physical position 14ₙ. is now physically accessible.

Although the second spatial relationship 30₂ has been defined, the virtual position 24 (and the virtual scene 22) remains dependent upon the first spatial relationship 30₁ while the user is stationary (same orientation).

The fixed spatial relationship between the virtual space 20 and the physical space 10 is temporarily suspended to enable re-positioning of the virtual space 20 and physical space 10 to create the second spatial relationship 30₂. The one or more first virtual elements 21 of the multiple virtual elements 21 are positioned in the particular relationship with the one or more first physical element of the multiple physical elements 11 according to the second spatial relationship 30₂

As illustrated in Fig 7A and 7B, when the user 2 changes physical position, the new second spatial relationship 30₂ is becomes fixed and is now used to determine the virtual position 24 (and the virtual scene 22").
The physical position 14ₙ of the user 2 is mapped by the second spatial relationship 30₂ between the virtual space and the physical space to a virtual position 24ₙ of the user 2' The figure illustrates that the putative path 18 in physical space 10 to the required physical position 14ₙ. is now physically accessible.

In some but not necessarily all examples, the second spatial relationship 30₂ is determined when a user moves from a first physical position 14 towards a second physical position 14 or when there is an expected initiation of user movement from the first physical position 14 towards the second physical position 14. Thus the first virtual elements 21 may be variable and may be determined in real time based on actual or expected user movement.

In some but not necessarily all examples, the second spatial relationship 30₂ is determined when a putative path of user movement in the physical space 10 does not lie wholly within the accessible physical space 10.

There has been an automatic change 32 in the spatial relationship between the virtual space 20 and the physical space 10 that results in positioning the one or more first virtual elements 21 of the multiple virtual elements 21 in the particular relationship with the one or more first physical elements 11 of the multiple physical elements 11. However, the change 32 in the spatial relationship may be minimized.

As illustrated in Fig 8A and 8B, the user 2 can change physical position, and the required physical position 14ₙ and the putative path 18 to the required physical position 14ₙ are physically accessible.

In this example, changes to the spatial relationship between the virtual space 20 and the physical space 10 is a "background" or hidden process that is performed without the user being aware that it is being performed.

In some but not necessarily all 'examples, changing the first spatial relationship 30₁ between the virtual space 20 and the physical space 10 to define the second spatial relationship 30₂ occurs automatically only when the first one or more virtual elements 21 are not being rendered. The user may therefore be unaware that the spatial relationship has been changed.

In some but not necessarily all examples, changing the first spatial relationship 30₁ to the second spatial relationship 30₂ comprises moving the virtual space 20 relative to a physical position 14 of the user 2 in the physical space 10 without requiring movement of the user. The change from the first spatial relationship 30₁ to the second spatial relationship 30₂ occurs without providing instructions to the user 2 to move in the physical space 10. The user may therefore be unaware that the spatial relationship has been changed.

In some but not necessarily all examples, the method 100 changes the first spatial relationship 30₁ to the second spatial relationship 30₂ while rendering a first virtual scene 22 of the virtual space 20 that corresponds to a first virtual position 24 of a user 2 in the virtual space 20 as determined by the combination of a first physical position 14 of a user 2 in the physical space 10 and the first spatial relationship 30₁ between the virtual space 20 and the physical space 10 (Figs 6A, 6B). Subsequently when user 2 changes physical position 14 from the first physical position 14 (Fig 6A) to the second physical position 14 (Fig 8A), the method 100 renders a second virtual scene 22 of the virtual space 20 that corresponds to a second virtual position 24 of the user 2 in the virtual space 20 as determined by the combination of the second physical position 14 of the user 2 in the physical space 10 and the second spatial relationship 30₂ (Fig 8A). The user may therefore be unaware that the spatial relationship has been changed.

In some but not necessarily all examples, the method 100 augments the virtual space 20 by generating additional virtual scenes 22" between the first virtual scene 22 (Fig 6B) and the second virtual scene 22 (Fig 8B) and renders the generated additional virtual scenes 22" when the user 2 physically moves between the first physical position 14 and the second physical position 14 (Fig 7A). In the illustrated example, when the user is oriented towards a generation region 19 of the physical space that lies between the real orientation associated with the first virtual scene 22 and the real orientation associated with the second virtual scene 22, the generated additional virtual scenes 22" are rendered. The generated additional virtual scenes 22" may be designed to be inconspicuous. The user may therefore be unaware that the spatial relationship has been changed.

Alternatively, changes to the spatial relationship between the virtual space 20 and the physical space 10 may be a foreground process that is performed with the user being aware that it is being performed. For example, the generated additional virtual scenes 22" may be designed to be conspicuous. Alternatively or additionally, changing the first spatial relationship 30₁ to the second spatial relationship 30₂ may occur by providing instructions to the user 2 to move in the physical space 10 while also moving the virtual space 20.

In some but not necessarily all examples, the second spatial relationship 30₂ is determined by initiation of user movement from a first physical position 14 towards a second physical position 14 or by an expected initiation of user movement from the first physical position 14 towards the second physical position 14. Thus the first virtual elements 21 may be variable and may be determined in real time based on actual or expected user movement.

In one example, the one or more first virtual elements 21 of the multiple virtual elements 21 in the virtual space 20 are at non-accessible virtual positions 24 in the virtual space 20 determined by a combination of one or more non-accessible physical positions 14 of the physical space 10 and the first spatial relationship 30₁ between the virtual space 20 and the physical space 10. The user 2 cannot occupy said one or more non-accessible physical positions 14 of the physical space 10. The first spatial relationship 30₁ is such that the physical space 10 prevents a user 2 changing physical position 14 to cause access to the one or more first virtual elements 21 of the multiple virtual elements 21 positioned in the particular relationship with the one or more first physical elements 11 of the multiple physical elements 11. For example a wall in the physical space 10 may prevent a user 2 changing physical position 14 to cause access to the one or more first virtual elements 21 of the multiple virtual elements 21 in the rendered virtual scene 22.

However, the one or more first virtual elements 21 are at accessible virtual positions 24 in the virtual space 20 determined by a combination of one or more accessible physical positions 14 of the physical space 10 and the second spatial relationship 30₂ between the virtual space 20 and the physical space 10. The user 2 can occupy said one or more accessible physical positions 14 of the physical space 10. The second spatial relationship 30₂ is such that the physical space 10 does not prevent a user 2 changing physical position 14 to cause access to the one or more first virtual elements 21 of the multiple virtual elements 21 positioned in the particular relationship with the one or more first physical elements 11 of the multiple physical elements 11. For example the wall in the physical space 10 does not prevent the user 2 changing physical position 14 to cause access to the one or more first virtual elements 21 of the multiple virtual elements 21 in the rendered virtual scene 22.

In another example, the one or more first virtual elements 21 of the multiple virtual elements 21 in the virtual space 20 are at accessible virtual positions 24 in the virtual space 20 determined by a combination of one or more accessible physical positions 14 of the physical space 10 and the first spatial relationship 30₁ between the virtual space 20 and the physical space 10. The user 2 can occupy said one or more accessible physical positions 14 of the physical space 10. The first spatial relationship 30₁ is such that the physical space 10 does not prevent a user 2 changing physical position 14 to cause access to the one or more first virtual elements 21 of the multiple virtual elements 21 positioned in the particular relationship with the one or more first physical elements 11 of the multiple physical elements 11. For example a wall in the physical space 10 may not prevent a user 2 changing physical position 14 to cause access to the one or more first virtual elements 21 of the multiple virtual elements 21 in the rendered virtual scene 22.

However, the one or more first virtual elements 21 are at inaccessible virtual positions 24 in the virtual space 20 determined by a combination of one or more inaccessible physical positions 14 of the physical space 10 and the second spatial relationship 30₂ between the virtual space 20 and the physical space 10. The user 2 cannot occupy said one or more inaccessible physical positions 14 of the physical space 10. The second spatial relationship 30₂ is such that the physical space 10 prevents a user 2 changing physical position 14 to cause access to the one or more first virtual elements 21 of the multiple virtual elements 21 positioned in the particular relationship with the one or more first physical elements 11 of the multiple physical elements 11. For example the wall in the physical space 10 prevents the user 2 changing physical position 14 to cause access to the one or more first virtual elements 21 of the multiple virtual elements 21 in the rendered virtual scene 22.

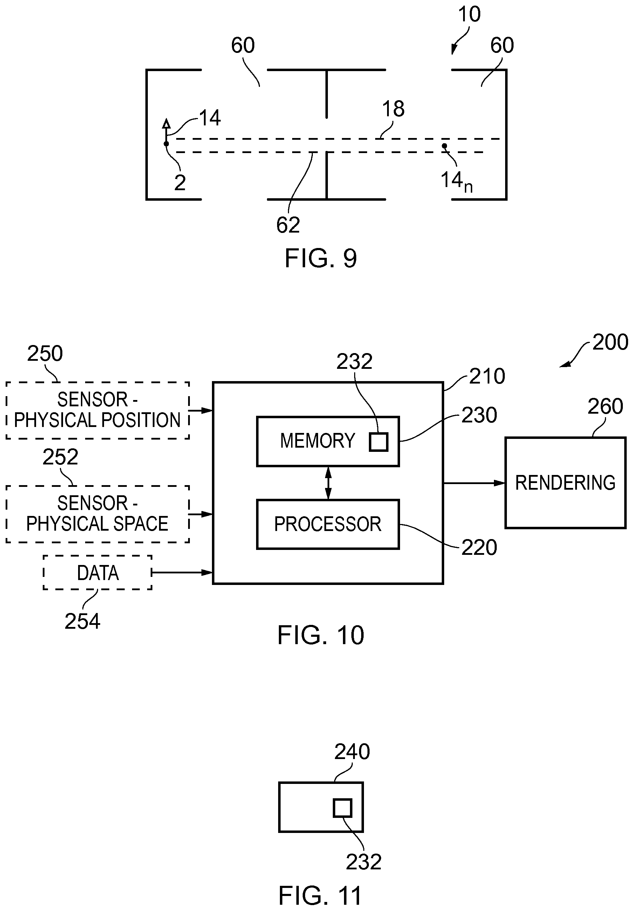

Fig 9 illustrates an example of a physical space 10 comprising rooms 60 interconnected by a doorway 62. It illustrates a time during the method 100 similar to that illustrated in Fig 6A.

The Figure illustrates the required physical position 14ₙ. This is the physical position that is required to define, according to the second spatial relationship 30₂, the virtual position 24ₙ of a user 2' for accessing the one or more first virtual elements 21. The Figure also illustrates the putative path 18 in physical space 10 to the required physical position 14ₙ.

In this example, the second spatial relationship 30₂ is selected so that the putative path lies wholly within the accessible physical space 10. In this example, the putative path extends from one room 60 through a doorway 62 to another interconnected room 60.

The following 'use cases' will better help understanding of the examples described above in relation to Gigs 1A to 9 .

In one use case, the physical space 10 , where a user 2 experiences VR content, is limited in dimensions. A user 2 cannot walk freely far enough in different directions when viewing VR with a headgear. The user 2 may walk into a wall or some other obstacle in the physical space 10. While viewing VR content with a headgear, when a user ends up physically near a corner in a physical space 10 and would need to continue walking towards a direction blocked by a physical wall 11, the system transforms that portion of the VR scene so that the movement direction in the virtual space 20 is aligned with a region of the physical space 10 allowing movement. The spatial transformation 30 is changed while the user 2 is looking away from that direction so he does not become aware of the transformation.

For example a user can look around in VR and in one direction (left-in Fig 5A), there is a tunnel 18 continuing forward (leftward, in Fig 5A).The tunnel 18 in the VR content continues in the left side of user (Fig 5A), which is blocked by a wall 11 in the physical space 10 where the user 2 is. Next, while the user 2 looks away from the VR tunnel 18, the system turns (repositions) the tunnel portion of the VR scene so that it matches an area in the physical space 10 which is not blocked by an obstacle (Figs 6A). The tunnel 18 is repositioned towards a direction where there is room to move in the physical space 10, but is as close as possible to the direction where the tunnel originally was i.e. there is as little offset 32 in the position as possible. Thus, when the user turns his head again towards left, the VR scene is extended (Fig 7A), and the user sees the tunnel 18 at a direction where he is able to walk in the physical space (Fig 8A). If needed, the system fills in the gap 19 caused by VR scene transformation by adding synthetic visual content in the gap area (Fig 7A). This improves the user experience in VR consumption as the boundaries of the physical space 10 do not restrict the user's physical movement while viewing VR. The invention has use in e.g. VR games and remote exploration of locations (free viewpoint VR).

Before repositioning of the tunnel 18, the tunnel 18 might be blocked in the game. Thus, the user is not allowed to walk into a position that would not be allowed by the physical space 10.

The tunnel 18 may be repositioned in a direction that leads into another room (Fig 9), thus extending the physical space 10 in which a user may explore the tunnel 18.

In some but not necessarily all examples, whenever there exists a portion of the VR world (virtual space 20) which spans significantly beyond the possible movement boundaries of the physical world (physical space 10), the system determines whether it is likely that the user 2 may move to that portion of the VR world 20. For example, if the game plot or other events indicate that the user may need to move to that portion of the content, then the system determines that the user may need to move there. In this case, the system starts to monitor user gaze direction. If the user 2 looks away from the portion of the content spanning outside the physical space 10, the system starts the VR world transform procedure (change in spatial relationship 30).
During the transform procedure, the system makes minimal changes to the VR world geometry so that the portion of the VR world 20 where movement is to continue is aligned with a portion of the physical space 10 allowing that movement. The determination is done by aligning the portion of the VR space 20 with a portion of a sensed model of the physical space 10allowing movement.

In another use case, a first user selects volumetric scenes (a virtual space 20) for a second user 2 who consumes VR content with a headgear. The first user selects an ideal starting location at new content for the second user 2. The system then rotates the new VR content such that walls in the physical space 10 where the second user 2 is located do not block the most likely movement directions in the new content.

In another use case, a first user selects volumetric scenes (a virtual space 20) for a second user 2 who consumes VR content with a headgear. The first user selects an ideal location where the second user 2 should end up in the virtual space 20. The virtual space 20 can be rotated by the system such that the second user 2 has room to move in the physical space 10 towards the ideal location. The system tries to find an alignment (offset and rotation) for the VR content (virtual space 20) and the most likely movement route such that the route can be moved as freely as possible. For example, no walls should be in the way. Path of the movement is aligned as well as possible to the physical room.

Scaling (shrinking/expanding) of the VR world (virtual space 20) may be used to improve the alignment.

The system improves the user experience in VR consumption as the boundaries of the physical space do not restrict the user's physical movement while viewing VR with a headgear. The system enables transformations done in the background, without interrupting the user's VR experience The system enables automatic matching of VR content geometry to physical room geometry, enabling maximal movement in minimal physical spaces The system has use in e.g. VR games and remote exploration of real and virtual locations (free viewpoint VR).

The above described methods, processes and systems may be performed under the control of a controller 210. Implementation of a controller 210 may be as controller circuitry. The controller 210 may be implemented in hardware alone, have certain aspects in software including firmware alone or can be a combination of hardware and software (including firmware).

As illustrated in Fig 10 the controller 210 may be implemented using instructions that enable hardware functionality, for example, by using executable instructions of a computer program 232 in a general-purpose or special-purpose processor 220 that may be stored on a computer readable storage medium (disk, memory etc) to be executed by such a processor 220.

The processor 220 is configured to read from and write to the memory 230. The processor 220 may also comprise an output interface via which data and/or commands are output by the processor 220 and an input interface via which data and/or commands are input to the processor 220.

The memory 230 stores a computer program 232 comprising computer program instructions (computer program code) that controls the operation of the apparatus 200 when loaded into the processor 220. The computer program instructions, of the computer program 232, provide the logic and routines that enables the apparatus to perform the methods illustrated in the figures. The processor 220 by reading the memory 230 is able to load and execute the computer program 232.

The apparatus 200 therefore comprises:
at least one processor 220; and
at least one memory 230 including computer program code
the at least one memory 230 and the computer program code configured to, with the at least one processor 220, cause the apparatus 200 at least to perform:
   (i) defining a first spatial relationship between a virtual space comprising multiple virtual elements and a physical space comprising multiple physical elements such that one or more first virtual elements of the multiple virtual elements cannot be positioned in a particular relationship with one or more first physical elements of the multiple physical elements;
   (ii) causing rendering of a changeable virtual scene of the virtual space that corresponds to a changing virtual position of a user in the virtual space as determined by a combination of a changing physical position of a user in the physical space and the first spatial relationship between the virtual space and the physical space;
   (iii) changing the first spatial relationship between the virtual space and
      the physical space to define a second spatial relationship between
      the virtual space and the physical space such that
      the one or more first virtual elements of the multiple virtual elements are now positioned in the particular relationship with
      the one or more first physical elements of the multiple physical elements; and
   (iv) causing rendering of a virtual scene of the virtual space
that corresponds to a virtual position of a user in the virtual space as determined by the combination of a physical position of a user in the physical space and the second spatial relationship between the virtual space and the physical space
and changing the rendered virtual scene as the user physical position in the physical space changes to a second physical position to render the one or more first virtual elements of the multiple virtual elements that are positioned in the particular relationship with the one or more first physical elements of the multiple physical elements.

The apparatus 200 may comprise in addition to the controller 210 a first sensor 252, a second sensor 250 and/or a data interface 254. The first sensor 252 provides an input for detecting the physical space 10 and/or changes to the physical space 10. The second sensor 250 provides an input for detecting a user's physical position 14 in the physical space 10 and/or changes to the user's physical position 14 in the physical space 10. The data interface provides a data input defining at least part of the virtual space 20. In other examples, the first sensor 252 and/or the second sensor may be separate to the controller 210 in a separate apparatus or separate apparatuses.

The first sensor 252 may be a depth map sensor. There are many different technologies that may be used to create a depth map. An example of a passive system, used in the Kinect™ device, is when an object is painted with a non-homogenous pattern of symbols using infrared light and the reflected light is measured using multiple cameras and then processed, using the parallax effect, to determine a position of the object. Other structured light technologies or other depth technologies such as time of flight or stereo vision (parallax) may also be used

In some but not necessarily all examples, the rendering device may be part of a head mounted device that can be worn by the user. In other examples, the rendering device may not be part of a head mounted device that can be worn by the user.

In some but not necessarily all examples, the apparatus 200 is a head mounted device that can be worn by the user. In this example, the second sensor 250 is configured to detect movement of the user's head.

As illustrated in Fig 11, the computer program 232 may arrive at the apparatus 200 via any suitable delivery mechanism 240. The delivery mechanism 240 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 232. The delivery mechanism may be a signal configured to reliably transfer the computer program 232. The apparatus 200 may propagate or transmit the computer program 232 as a computer data signal.

Although the memory 230 is illustrated as a single component/circuitry it may be implemented as one or more separate components/circuitry some or all of which may be integrated/removable and/or may provide permanent/semi-permanent/ dynamic/cached storage.

Although the processor 220 is illustrated as a single component/circuitry it may be implemented as one or more separate components/circuitry some or all of which may be integrated/removable. The processor 220 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the figures may represent steps in a method and/or sections of code in the computer program 232. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The computer program 232 may be a module, the data carrier 240 may be a module, the controller 210 may be a module, the apparatus 200 may be a module.
The sensors 252, 250 may be one or more modules. The rendering device 260 may be a module.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
(i) causing rendering of a virtual scene that corresponds to a virtual position of a user in a virtual space as determined by a combination of a physical position of the user in a physical space and a first spatial relationship between the virtual space and the physical space, wherein the virtual space comprises multiple virtual elements and the physical space comprises multiple physical elements;
(iii) responsive to determining that one or more first virtual elements of the multiple virtual elements are not positioned in a particular relationship with one or more first physical elements of the multiple physical elements, changing the first spatial relationship between the virtual space and the physical space to define a second spatial relationship between the virtual space and the physical space such that the one or more first virtual elements of the multiple virtual elements are positioned in the particular relationship with the one or more first physical elements of the multiple physical elements; and
(iv) causing rendering of a virtual scene of the virtual space that corresponds to a virtual position of a user in the virtual space as determined by the combination of a physical position of the user in the physical space and the second spatial relationship between the virtual space and the physical space and changing the rendered virtual scene as the user physical position in the physical space changes to a second physical position to render the one or more first virtual elements of the multiple virtual elements that are positioned in the particular relationship with the one or more first physical elements of the multiple physical elements.

2. A method as claimed in claim 1, wherein
determining that one or more first virtual elements of the multiple virtual elements are not positioned in the particular relationship with one or more first physical elements of the multiple physical elements comprises:
determining that a likelihood that the one or more first virtual elements of the multiple virtual elements are to be accessed exceeds a threshold; and
determining that access to the one or more first virtual elements of the multiple virtual elements will be obstructed by the one or more first physical elements, wherein for the one or more first virtual elements to be positioned in the particular relationship with the one or
more first physical elements, the one or more first physical elements will not obstruct access to the one or more first virtual elements;
or
wherein determining that one or more first virtual elements of the multiple virtual elements are not positioned in the particular relationship with one or more first physical elements of the multiple physical elements comprises:
determining that a likelihood that the one or more first virtual elements of the multiple virtual elements are to be accessed exceeds a threshold; and
determining that access to the one or more first virtual elements of the multiple virtual elements that should be inaccessible will not be obstructed by the one or more first physical elements wherein for the one or more first virtual elements to be positioned in the particular relationship with the one or more first physical elements, the one or more first physical elements will obstruct access to the one or more first virtual elements.

3. A method as claimed in claim 1, wherein the one or more first virtual elements of the multiple virtual elements are adjacent a virtual position of the user in the virtual space and the one or more first physical elements of the multiple physical elements are adjacent a physical position of the user in the physical space, and
wherein determining that one or more first virtual elements of the multiple virtual elements are not positioned in the particular relationship with one or more first physical elements of the multiple physical elements comprises:
determining that a particular virtual position in the virtual space that should be accessible cannot be accessed because the physical position of a user in the physical space mapped to the particular virtual space via the first spatial relationship cannot be physically accessed by the user
or wherein determining that one or more first virtual elements of the multiple virtual elements are not positioned in the particular relationship with one or more first physical elements of the multiple physical elements comprises:
determining that a particular virtual position in the virtual space that should not be accessible can be accessed because the physical position of a user in the physical space mapped to the particular virtual space via the first spatial relationship can be physically accessed by the user.

4. A method as claimed in any preceding claim wherein determining that one or more first virtual elements of the multiple virtual elements are not positioned in the particular relationship with one or more first physical elements of the multiple physical elements comprises:
sensing the physical space.

5. A method as claimed in any preceding claim, wherein the first spatial relationship between the virtual space and a wall in the physical space is such that the wall in the physical space prevents a user changing physical position to cause access to the one or more first virtual elements of the multiple virtual elements in the rendered virtual scene.

6. A method as claimed in any preceding claim, wherein changing the first spatial relationship between the virtual space and the physical space to define the second spatial relationship comprises:
suspending temporarily a fixed spatial relationship between the virtual space and the physical space to enable re-positioning of the one or more first virtual elements of the multiple virtual elements in the particular relationship with the one or more first physical elements of the multiple physical elements.

7. A method as claimed in any preceding claim, wherein changing the first spatial relationship between the virtual space and the physical space to define the second spatial relationship comprises: automatically changing the spatial relationship between the virtual space and the physical space to cause positioning of the one or more first virtual elements of the multiple virtual elements in the particular relationship with the one or more first physical elements of the multiple physical elements.

8. A method as claimed in claim 6 or 7, wherein automatically changing the spatial relationship comprises at least automatically rotating or rotating and translating the virtual space relative to the physical space to cause positioning of the one or more first virtual elements of the multiple virtual elements in the particular relationship with the one or more first physical elements of the multiple physical elements.

9. A method as claimed in any preceding claim, wherein changing the first spatial relationship between the virtual space and the physical space to define the second spatial relationship occurs automatically only when the first one or more virtual elements are not being rendered.

10. A method as claimed in any preceding claim, wherein changing the first spatial relationship between the virtual space and the physical space to define a second spatial relationship between the virtual space and the physical space comprises moving the virtual space relative to a physical position of the user in the physical space.

11. A method as claimed in any preceding claim, wherein
while rendering a first virtual scene of the virtual space that corresponds to a first virtual position of a user in the virtual space as determined by the combination of a first physical position of a user in the physical space and the first spatial relationship between the virtual space and the physical space, changing the first spatial relationship between the virtual space and the physical space to define the second spatial relationship between the virtual space and the physical space;
subsequently when the user changes physical position from the first physical position to the second physical position, rendering a second virtual scene of the virtual space that corresponds to a second virtual position of the user in the virtual space as determined by the combination of the second physical position of the user in the physical space and the second spatial relationship between the virtual space and the physical space.

12. A method as claimed in claim 11, comprising augmenting the virtual space by generating additional virtual scenes between the first virtual scene and the second virtual scene and rendering the generated additional virtual scenes when the user moves between the first physical position and the second physical position.

13. A method as claimed in any preceding claim, wherein the second spatial relationship is determined by initiation of user movement towards the second physical position or by expected initiation of user movement towards the second physical position.

14. A method as claimed in any preceding claim, comprising receiving:
first sensor input for detecting the physical space and/or changes to the physical space;
second sensor input for detecting a user physical position in the physical space and/or changes to a user physical position in the physical space; and
data input defining at least part of the virtual space.

15. An apparatus comprising means for performing the method of any of claims 1 to 14 or a computer program that when run on a processor enables the method of any of claims 1 to 14.
